# EUROPEAN PATENT APPLICATION

(11) **EP 3 889 510 A1**
(43) Date of publication of application: **06.10.2021**
(21) Application number: 21020159.6
(22) Date of filing: 18.03.2021
(51) Int. Cl.: F24D 11/00, F24D 19/10

(54) **MICROGENERATION INSTALLATION INCORPORATING APPARATUS FOR DETERMINING THE TEMPERATURE DISTRIBUTION IN A LIQUID STORAGE VESSEL**

(30) Priority: 30.03.2020 GB 202004582
(71) Applicant: Simmons, Robin, Daventry, Northamptonshire NN11 2JS (GB); Pillinger, Stephen John, Tiverton, Devon EX16 4DL (GB)
(72) Inventor: Simmons, Robin, Daventry, Northamptonshire NN11 2JS (GB); Pillinger, Stephen John, Tiverton, Devon EX16 4DL (GB)
(74) Representative: Craske, Stephen Allan

(57) **Abstract**

A microgeneration installation incorporating a photovoltaic electrical power generator (1) and a water storage cylinder (2) with an immersion heater (3) includes temperature monitoring apparatus (4-6). A plurality of discrete digital temperature sensor elements (4) are inserted through the top of the cylinder in a sealed sleeve, held in predetermined substantially vertically-spaced relationships. A controller (5) collects the temperature readings from each sensor (4) and sends data based on the collected temperature readings to an indicator display (6) located externally of the vessel. The display (6) is adapted to contemporaneously indicate the individual temperatures read by the sensor elements (4) in both a numeric and a vertical bargraph-type colour display.

## Description

### TECHNICAL FIELD OF THE INVENTION

This invention relates to microgeneration installations.

### BACKGROUND

Microgeneration is the generation of electricity on a small scale, typically for domestic use, and by methods that do not contribute to the depletion of natural resources such as solar panels or wind turbines. In microgeneration systems, it is advantageous to use on-site as much as possible of the electricity generated. This requires a means to store any energy which exceeds the instantaneous requirements of the property and which would otherwise be exported to the electricity grid. A cost-effective way to accomplish this is to divert the energy into hot water storage, via one or more electric immersion heaters. With a well-insulated hot water cylinder it is generally not possible to obtain an accurate indication of the amount of hot water available and hence to decide whether a boost from imported energy would be useful to satisfy anticipated demand. Conversely, if imported electricity is routinely used to be sure of an adequate supply of hot water, it is likely that a significant amount of energy from the microgeneration system would be wasted rather than being usefully exported.

Microgeneration systems such as wind turbines and solar panels are inherently variable in their power output. As a result, the objective of maximising on-site energy use and minimising imported energy requires significant intervention from the user, which can be a serious disincentive.

A standard domestic hot water storage cylinder generally includes a thermostat which controls the heat input from an electrical heating element (an immersion heater) or an indirect hot water heating coil. Thermostats incorporated into the immersion heaters are very unreliable. Digital temperature controllers tend to be more accurate and reliable, but both are only capable of accurately determining the temperature at one position in the cylinder. There is often a considerable body of water in the cylinder (generally towards the bottom) which is below the optimum temperature, which in a microgeneration installation, represents wasted heat storage potential.

Patent No. US 4 969 749 discloses apparatus for measurement of average temperature change in the liquid in a storage vessel. A plurality of discrete, temperature sensitive elements, at predetermined positions in the liquid, are connected in series to provide a direct output reading representing average temperature change of the entire volume of liquid in the vessel. However, some regions of the vessel may be considerably above or below the average temperature.

### SUMMARY OF THE INVENTION

When viewed from one aspect the present invention proposes a microgeneration installation:
- an electrical power generator (1);
- a storage vessel (2);
- means (3) for heating liquid in the storage vessel;
- apparatus (4-6) for determining the temperature distribution in said liquid, including:
   - temperature sensing means (41-43) capable of providing temperature readings at a plurality of predetermined vertically-spaced locations,
   - indicator means (6) located externally of the vessel,
   - a controller (5) for collecting the temperature readings from the temperature sensing means and sending data based on the collected temperature readings to the indicator means;
   wherein said indicator means (6) is adapted to contemporaneously indicate the individual temperatures read by the temperature sensing means.

The term "vessel" as used herein is intended to include any liquid container, whether of conventional upright cylindrical shape or of any other configuration.

### BRIEF DESCRIPTION OF THE DRAWINGS

The following description and the accompanying drawings referred to therein are included by way of non-limiting example in order to illustrate how the invention may be put into practice. In the drawings:
Figure 1 is a schematic diagram of a microgeneration installation;
Figure 2 is a longitudinal section through part of the sensor assembly used in the installation;
Figure 3 is a block diagram of a temperature monitor used in the installation;
Figure 4 is a TFT display used in the temperature monitor;
Figure 5 is a schematic diagram of a hot water cylinder which is used with the temperature monitor.

### DETAILED DESCRIPTION OF THE DRAWINGS

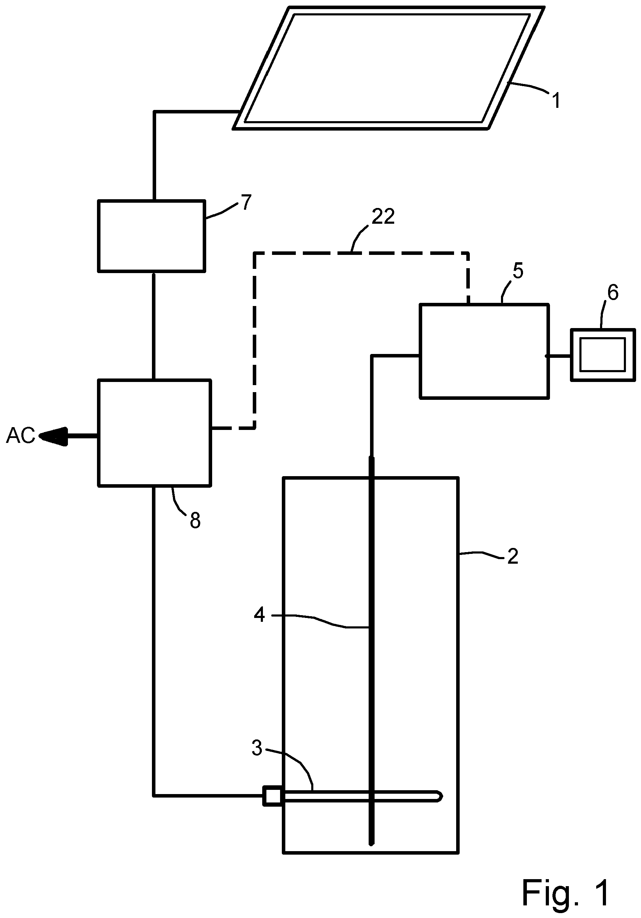

Referring firstly to **Fig. 1****,** the microgeneration installation includes an electrical power generator 1 in the form of a photovoltaic solar panel (but which could also be a wind turbine, water turbine etc.) and a hot water storage vessel in the form of a cylinder 2. This cylinder is provided with means for heating water which is stored within the cylinder, such as one or more electrical immersion heaters 3. The installation also includes temperature monitoring apparatus for determining the temperature distribution of the water in the cylinder 2, including a sensor assembly 4 and, located outside the cylinder, an electronic controller 5 and an indicator display 6.

The solar panel 1, which may be mounted on a roof or in a freestanding array, supplies an electrical inverter 7 which converts the photovoltaic output to alternating current at mains voltage, typically 220-240 volts AC. A switching unit 8 enables the inverter output to be switched between the mains distribution grid and the immersion heater 3 so that a proportion of the power is diverted to heat the water in the cylinder 2 when required. The switching unit 8 may be operated by an automatic control arrangement, which may include timers and appropriately positioned temperature sensors, with provision for manual switching between export to grid and heating the water in cylinder 2.

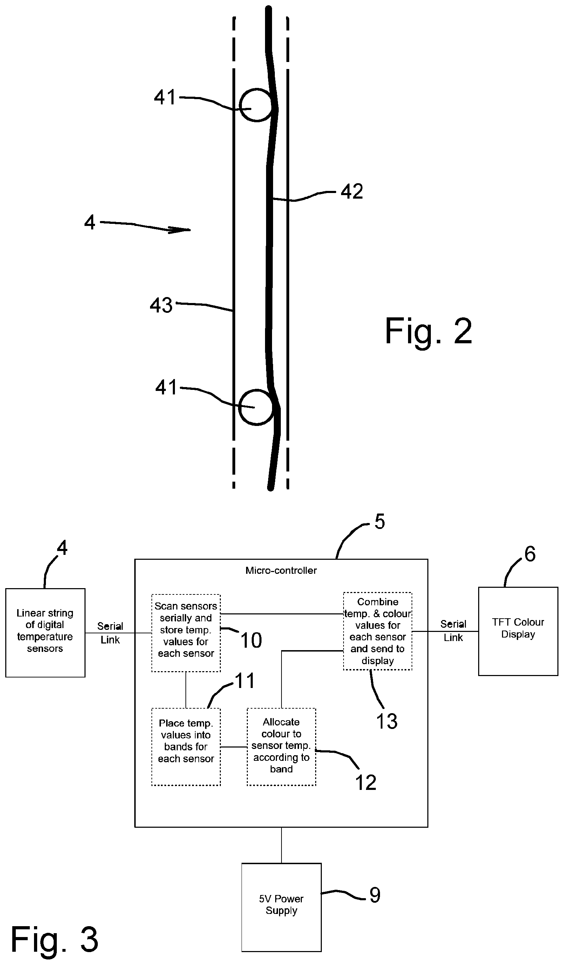

The sensor assembly 4 allows temperature to be measured at a number of locations which are evenly spaced between the lowest and highest useful points of the storage cylinder 2. In a typical sensor assembly, part of which is shown in **Fig. 2****,** ten digital temperature sensors 41 are used (e.g. type DS18B20), which are connected together via a 3-wire cable 42 providing ground, supply voltage and a data line. The cable should have sufficient stiffness to hold the temperature sensors in a predetermined substantially vertically-spaced relationship. The sensor string including the interconnecting cable 42 is housed within a sleeve 43 which is sealed against ingress of water. The length of the sensor string is dependent on the height of the hot water cylinder. The lowest measurement point is normally a little above the position of the cold feed inlet (not shown). If it is any lower, the sensor will constantly record the temperature of the cold water input, which may be considered not to be very useful. The position of the highest sensor should be just below the top of the cylinder. If the cylinder has a domed top, the measurement point needs to be a little lower as the volume to water level ratio is reduced by this shape.

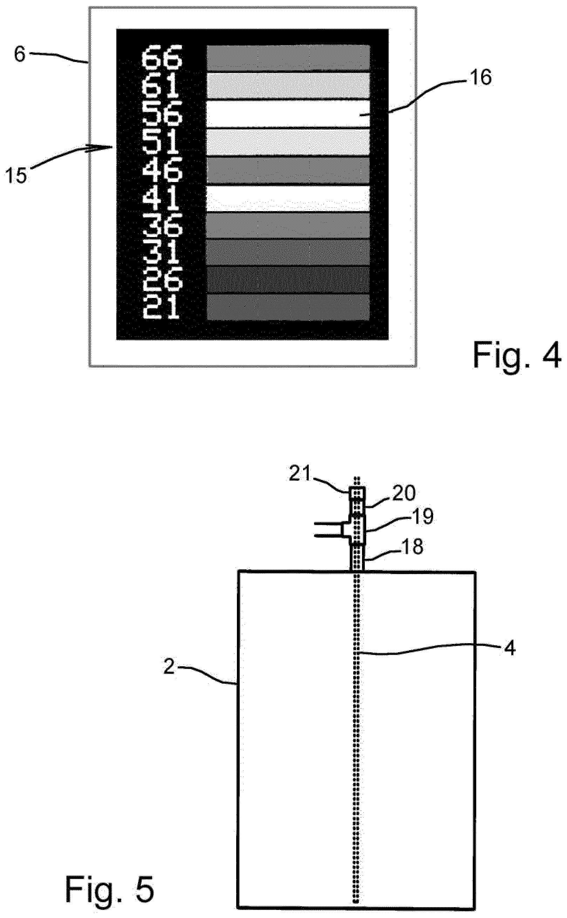

Referring to **Fig. 3****,** the temperature monitor has its own power supply 9. The sensors in the assembly 4 have unique addresses on the data bus and are interrogated sequentially by a micro-controller 5 such as the Arduino Nano, which is programmed to provide a scanning function 10. Since temperature changes in the water normally occur quite slowly, the sample rate of the sensors need not be rapid; a period of several seconds is perfectly adequate. Each of the temperature values collected during a scan is stored, and then allocated to one of a series of contiguous temperature bands in function 11. For example, the readings may be allocated to ten bands of 5 degrees each, covering the range from 16-66°C. Each reading is then allocated a different colour value, function 12, according to the band in which it falls. By way of example, a reading falling within the temperature band 16-21°C may be allocated the colour dark purple, readings falling within the next band of 22-26°C may be allocated a dark shade of blue, and so on across the range through green, yellow and orange through to red at 62-66°C. In a final step, function 13, the colour values are assembled with the temperature readings from each sensor and sent via a serial link to the display 6, one example of which is shown in **Fig. 4****.**

A small TFT colour display 6 is arranged to contemporaneously display the individual temperature readings obtained during each scan. With ten sensors a TFT colour display of 1.8 inches (45 mm) would be suitable. The temperature at each of the sensors is displayed both numerically in a vertical column 15, and as a coloured bar 16 corresponding to the allocated colour value. The coloured bars 16 are arranged vertically in the manner of a bargraph, to represent the temperature profile from the bottom to the top of the cylinder, alongside the associated numerical values 15, as shown. Colour changes occur at increments of 5 degrees, from dark purple at the low temperature extreme to red at the high end. This arrangement is capable of providing the essential information on the volumes and temperatures of the available hot water within the cylinder in a manner which is very quick and easy to read and understand. In particular, the change of colour from blue to green has been selected to represent the 45°C level at which the water becomes hot enough for most purposes (the colour green being generally understood to mean "go").

The temperature monitor is capable of being retro-fitted to existing hot water cylinders, and careful consideration has been given to the means of introducing the sensors into the cylinder. The great majority of existing cylinders have a hot water draw-off point 18 at the top centre, as shown in **Fig. 5****,** which can conveniently be used to introduce the sensor assembly 4 as it generally provides an unobstructed vertical path to the base of the cylinder. For retro-fits, a simple modification to the hot draw-off fitting is all that is required to accommodate the sensor sleeve, replacing the usual elbow fitting with a T-connector 19 and reducer 20 which seals against the sensor sleeve, e.g. by a compression coupler 21. For new installations this can be incorporated while completing the plumbing work.

The sleeve of the sensor assembly 4 is preferably rigid when in place and stable at the temperatures normally encountered in the cylinder. A typical sleeve can be formed from 8 mm copper tube, which can be carefully unrolled from the coil in which it is usually supplied and straightened as it is inserted into the cylinder to within a few centimetres of the base. The sensor sleeve must be sealed at the bottom end, e.g. using a soldered end cap, and kept free of any kinks or dents. Once the sleeve is fixed in place by means of the compression coupler 20, the sensor string is fed down the sleeve until the lowest sensor is near the bottom end of the sleeve. The 8 mm tube has a bore of about 6 mm which allows the sensor devices to be close to the walls for good thermal contact with the water while allowing sufficient clearance for the string to be inserted smoothly.

It would of course be possible for new cylinders to be manufactured ready for the introduction of a sensor string, e.g. by incorporating the sleeve into the wall of the cylinder. This would obviate the need to insert a separate sleeve through the draw-off point, reducing installation costs and making the cylinders more attractive to purchasers.

The temperature bands described above in relation to **Fig. 4** are given purely by way of example. In a successful working prototype nine colour bands were used, set to:
< 30° C
30° C - 34° C
35° C - 39° C
40° C - 44° C
45° C - 49° C
50° C - 54° C
55° C - 59° C
60° C - 64° C
> 64° C.

The bottom dark purple colour band therefore indicates temperatures below 30° C and the top red band indicates temperatures above 64° C.

Although the temperature monitor has been designed to use cheap and readily available discrete digital temperature sensors, it is also possible to use distributed temperature sensing means which already exist. These are capable of measuring temperature distribution over a length of optical fibre cable using the fibre itself as the sensing element. These optoelectronic devices measure temperature by means of optical fibres which function as linear sensors. Temperatures can be recorded along the optical sensor cable, not at discrete points, but as a continuous profile. A high accuracy of temperature determination can be achieved over great distances. Typically the DTS systems can locate the temperature to a spatial resolution of less than 1 metre. Although the cost would presently be prohibitive it is possible that cost and spatial resolution could both be reduced in the future, making such sensing means viable.

The temperature monitor provides the means for manually monitoring the temperature profile of the body of water within the cylinder and permits more efficient use of the microgeneration equipment, operating the switching unit 8 to provide additional water heating when the monitor shows that there is spare heat storage capacity within the cylinder. The processing power of the micro-controller can be utilised to provide additional information, such as converting the volume and temperature into "shower minutes" or number of baths available, taking into account the mixing with cold water to produce the ideal temperatures for these purposes. There has recently been considerable progress in the field of Artificial Intelligence (AI), and this new technology may be employed to reduce the need for user input. For example, it is certain that solar or wind input will continue to be forecast with increasing accuracy and the control unit could access this information from the internet to predict the energy input. Furthermore, over a period of time, an AI system could easily "learn" the habits of its users and match the likely demand with the forecast energy input.

The processing power of the micro-controller 5 also opens up the possibility of automatically operating the switching unit 8 to optimise the input of heat energy to the storage cylinder 2. This is illustrated in **Fig. 1** by by the broken control line 22.

In a further development, a wi-fi module can be incorporated to operate a remote display, which may then be positioned in the most convenient location for the user.

The majority of existing hot water cylinders incorporate an indirect hot water circulation coil which is supplied from a gas or oil fired boiler. The indirect coil is located at the bottom of the cylinder and may require the immersion heater to be positioned higher above the base, preventing the electrical element from heating the water in the lower part of the cylinder. In order to maximise the energy storage potential of such a hot water cylinder, a destratification loop may be added to the cylinder to mix the water and enable further heating. Another development would be for the temperature monitoring system to directly control both the immersion heaters and the destratification pumps.

Whilst the above description places emphasis on the areas which are believed to be new and addresses specific problems which have been identified, it is intended that the features disclosed herein may be used in any combination which is capable of providing a new and useful advance in the art.

## Claims

1. A microgeneration installation:
- an electrical power generator (1);
- a storage vessel (2);
- means (3) for heating liquid in the storage vessel;
- apparatus (4-6) for determining the temperature distribution in said liquid, including:
- temperature sensing means (41-43) capable of providing temperature readings at a plurality of predetermined vertically-spaced locations,
- indicator means (6) located externally of the vessel,
- a controller (5) for collecting the temperature readings from the temperature sensing means and sending data based on the collected temperature readings to the indicator means;
wherein said indicator means (6) is adapted to contemporaneously indicate the individual temperatures read by the temperature sensing means.

2. A microgeneration installation according to claim 1 wherein the means (3) for heating liquid in the storage vessel includes an electrical immersion heater.

3. A microgeneration installation according to claim 1 or 2 wherein the temperature sensing means includes a plurality of discrete temperature sensor elements (41) each capable of providing a temperature reading, and means (42, 43) to position said sensor elements in predetermined substantially vertically-spaced relationships.

4. A microgeneration installation according to claim 3 wherein the discrete temperature sensor elements (41) are digital temperature sensors which are connected together via a cable (42) providing a supply voltage and a common data bus.

5. A microgeneration installation according to claim 4 wherein the discrete temperature sensor elements (41) have unique addresses on the data bus and are interrogated sequentially by the controller (5).

6. A microgeneration installation according to claim 4 or 5 wherein temperature values read from the discrete temperature sensor elements (41) during a scan are each allocated to one of a predetermined series of contiguous temperature bands (11).

7. A microgeneration installation according to claim 6 wherein each temperature reading is allocated a different colour value according to the temperature band in which it falls (12).

8. A microgeneration installation according to claim 7 wherein the allocated colour values are assembled with the temperature readings from each sensor (13) and sent to the indicator means (6).

9. A microgeneration installation according to claim 7 or 8. wherein the indicator means (6) is arranged to contemporaneously display the temperature readings obtained during each scan as coloured bars (16) corresponding to the allocated colour values.

10. A microgeneration installation according to any of claims 5 to 9 wherein the indicator means (6) is arranged to contemporaneously display the numerical temperature readings (15) obtained during each scan.

11. A microgeneration installation according to any of claims 4 to 10 wherein the discrete temperature sensor elements (41) and the interconnecting cable (42) are housed within a sensor sleeve (43) which is sealed against ingress of water.

12. A microgeneration installation according to claim 11 wherein the sensor sleeve is inserted through a hot water draw-off point (18) at the top of the storage vessel (2).

13. A microgeneration installation according to claim 12 wherein the hot water draw-off point (18) includes a T-connector (19) and reducer (20) which seals against the sensor sleeve (43).

14. A microgeneration installation according to claim 11, 12 or 13 wherein the sensor sleeve (43) is a metal tube which is sealed at the bottom end.

15. A microgeneration installation according to any preceding claim wherein the controller (5) is arranged to operate a switching unit (8) via a control line (22) to feed electrical power to the means (3) for heating liquid in the storage vessel (2) when the controller (5) determines that liquid has unused heat storage capacity.
